# EUROPÄISCHE PATENTSCHRIFT

(11) **EP 1 104 856 B1**
(45) Veröffentlichungstag und Bekanntmachung des Hinweises auf die Patenterteilung: **26.02.2003**
(21) Anmeldenummer: 00125562.9
(22) Anmeldetag: 22.11.2000
(51) Int. Cl.: F16F 1/373, F16B 5/02

(54) **Schwingungdämpfende Verbindungsanordnung für zwei gegeneinander verschiebliche Bauteile**
Vibration damping coupling for two parts which can slide with respect to each other
Accouplement amortisseur des vibrations pour deux éléments de construction coulissantes l'un par rapport a l'autre

(30) Priorität: 23.11.1999 DE 29920496 U
(43) Veröffentlichungstag der Anmeldung: 06.06.2001
(73) Patentinhaber: Schwarz Verbindungs-Systeme GmbH, 75382 Althengstett (DE)
(72) Erfinder: Schwarz, Helmut, 71263 Weil der Stadt (DE)
(74) Vertreter: Blutke, Klaus Wilhelm, Dipl.-Ing.

(56) Entgegenhaltungen:
- GB-A- 1 582 148
- US-A- 4 074 491
- US-A- 5 129 768
- US-A- 5 950 277

## Beschreibung

Die Erfindung bezieht sich auf eine Anordnung zum lösbaren Verbinden zweier gegeneinander verschiebbarer Bauteile.

Derartige Verbindungsanordnungen werden insbesondere zur lösbaren Anbringung von Innenverkleidungen in Flugzeugen und Kraftfahrzeugen als sogenannte "Loslager" verwendet.

Sie dienen einem schnellen Verbindungsaufbau und ermöglichen eine einfache Demontage für Wartungsarbeiten und Reparaturen.

Es ist Aufgabe der Erfindung, ein schwingungsdämpfendes Loslager anzugeben.

Diese Aufgabe der Erfindung wird in vorteilhaftere Weise durch die in den Ansprüchen 1 und 2 angegebenen Merkmale gelöst. Vorteilhafte Weiterbildungen der Erfindung sind in den Unteransprüchen gekennzeichnet.

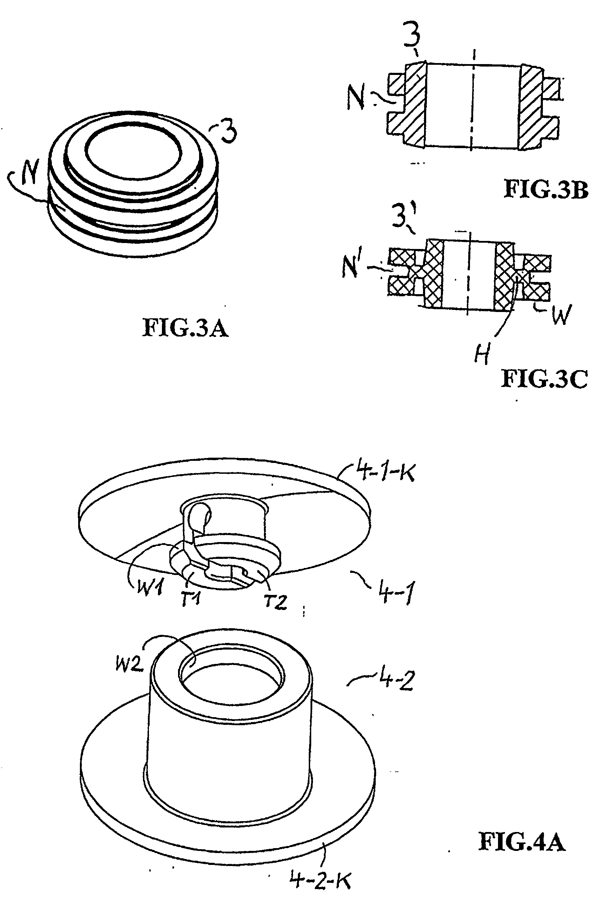

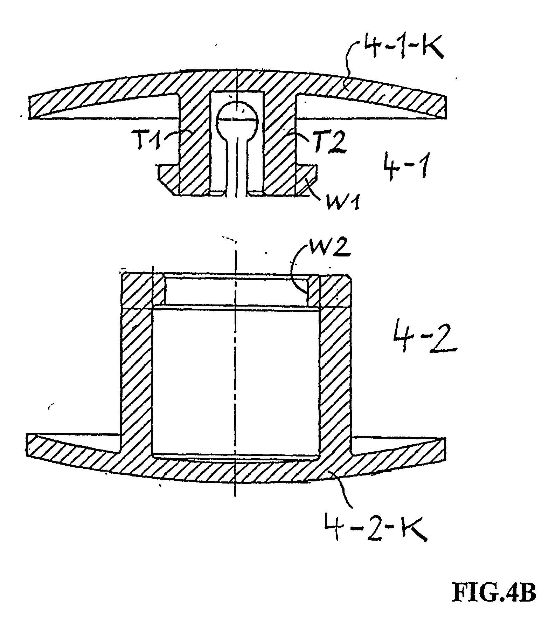

Ausführungsbeispiele der Erfindung sind in den Zeichnungen dargestellt und werden im folgenden näher beschrieben. Es zeigen:
FIG.1 A
   eine schematische perspektivische Darstellung der erfindungsgemäßen Verbindungsanordnung mit einem in einem Aufnehmerteil verschiebbar angeordneten Haltearm , an welchem ein Schwingungsdämpfferring mit Gleitelementen befestigt ist,
FIG.1B
   eine auszugsweise Schnittdarstellung der erfindungsgemäßen Verbindungsanordnung für einen Schwingungsdämpferring gemäß FIG. 3A und FIG. 3B und für Gleitelemente gemäß FIG. 4A und 4B,
FIG.1C
   eine auszugsweise Schnittdarstellung der erfindungsgemäßen Verbindungsanordnung für einen Schwingungsdämpferring gemäß FIG. 3C und für Gleitelemente gemäß FIG. 4A und 4B,
FIG. 2A
   eine perspektische Darstellung einer ersten Ausführungsform des Haltearms,
FIG. 2B
   eine perspektische Darstellung einer zweiten Ausführungsform des Haltearms,
FIG. 3A
   eine perspektische Darstellung eines Schwingungsdämpferrings,
FIG.3B
   eine Schnittdarstellung des Schwingungsdämpfferrings gemäß FIG. 3A,
FIG.3C
   eine Schnittdarstellung einer anderen Ausführungsform des Schwingungsdämpfferrings,
FIG. 4A
   eine perspektivische Darstellung zwei verbindbarer Gleitelemente ,
FIG. 4B eine Schnittdarstellung der Gleitelemenete gemäß FIG. 4A.

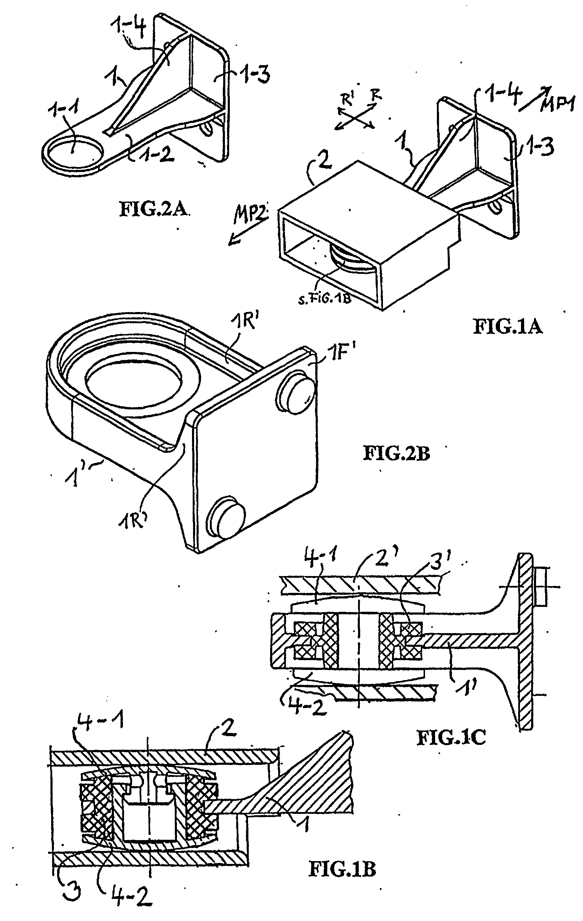

FIG.1 A zeigt
eine schematische perspektivische Darstellung der erfindungsgemäßen Verbindungsanordnung mit einem in einem hohlprofilartigen Aufnehmerteil 2 verschiebbar angeordneten Haltearm 1, an welchem ein Schwingungsdämpfferring mit Gleitelementen angeordnet ist.
Einzelheiten des Schwingungsdämpferringes sind in Zusammenhang mit den FIG. 3 A bis 3C, Einzelheiten der Gleitelemente in Zusammenhang mit den FIG. 4A und 4B beschrieben.
Der Haltearm 1 ist mit einem nicht dargestellten ersten Bauteil MP1, das Aufnehmerteil 2 mit einem nicht dargestellten zweiten Bauteil MP2 verbindbar, sofern Haltearm bz. Aufnehmerteil nicht selbst zum ersten bzw.zweiten Bauteil gehören.
Bei einer gegenseitigen Verschiebung der Bauteile MP1 und MP2 (hier in horizontaler Richtung R/R') verschiebt sich auch der Haltearm 1 gegenüber dem Aufnehmerteil 2. (Die Verschiebung bei einem geringen von der Horizontalebene abweichenden Neigungswinkel des Haltearmes gegenüber dem Aufnehmerteil wird ebenfalls erfaßt). Bei dieser Verschiebung gleiten am Haltearm befestigte Gleitelemente (FIG. 4A und FIG.4B) an der oberen und unteren Innenwandung des hohlprofilartigen Aufnehmerteils entlang.
Diese Gleitelemente sind in einem am Haltearm 1 angebrachten Schwingungsdämpferring (3; 3'in FIG.1B;FIG.1C) angeordnet. Die Gleitelemente 4-1, 4-2 stehen aus Gründen der Schwingungsdämpfung nicht direkt mit dem Haltearm 1 (1') in Verbindung.
In einem Bauteil unerwünscht auftretende Schwingungen werden durch diese Anordnung allenfalls nur gedämpft auf das andere Bauteil übertragen.

FIG. 2A zeigt
eine perspektische Darstellung einer ersten Ausführungsform des Haltearms 1. Dieser Haltearm weist ein zungenartiges Teil 1-2 auf, welches über Versteifungen 1-4 mit einem flanschartigen Teil 1-3 verbunden ist. Das Teil 1-3 dient der Verbindung mit dem ersten Bauteil MP1 (nicht dargestellt).
Am freien Ende des zungenartigen Teils 1-2 ist eine Bohrung 1-1 angebracht. Sie dient zur Aufnahme eines in den FIG.3 A bis 3C dargestellten Schwingungsdämpfferringes 3 (bzw.3').
Der Schwingungsdämpfferring weist eine periphere konzentrische Nut N (bzw. N') auf. Der Schwingungsdämpferring wird so in der Öffnung 1-1 des Haltearmes angebracht, daß der Rand dieser Öffnung von der Nut N (N') aufgenommen ist.Das Einbringen des Schwingungsdämpfferinges 3 (3') in die Bohrung 1-1 ist unproblematisch, da er aus deformierbarem elastischen Material, z.B. aus Gummi oder Kunststoff, vorzugsweise Silikon, gefertigt ist.
Der Schwingungsdämpferring kann unterschiedlich ausgeführt sein.

FIG. 3A zeigt
die perspektische Darstellung einer ersten Ausführungsform des Schwingungsdämpferrings, dessen Schnittdarstellung in FIG. 3B wiedergegeben ist. Hier ist die Nut N Teil der eigentlichen Ringwandung, anders als in FIG. 3C.

FIG.3C zeigt
eine Schnittdarstellung einer anderen Ausführungsform des Schwingungsdämpfferrings , bei dem ein Wulst W mit der Nut N' über eine im Vergleich zum Wulst schmale Verbindung H mit der eigentlichen Ringwandung verbunden ist. Diese Ausführungsform wirkt besonders schwingungsdämpfend wegen der zusätzlichen Schwingungsfähigkeit des "schmalhalsigen" Wulstes.

FIG.1B zeigt
eine auszugsweise Schnittdarstellung der erfindungsgemäßen Verbindungsanordnung für einen Schwingungsdämpferring 3 gemäß FIG. 3A und FIG. 3B und für Gleitelemente 4-1 und 4-2 gemäß FIG. 4A und 4B.

Auf der Ober- und Unterseite des Schwingungsdämpferringes 3 ist ein oberes 4-1 und ein unteres 4-2 Gleitelement angeordnet. Beide Elemente sind innerhalb der Öffnung des Schwingungsdämpfeferringes durch eine Schnappverbindung verbunden.
Jedes Gleitelement weist einen pilzartigen konvex gewölbten Kopf auf. Dieser liegt an der Innenwandung des Hohlprofils 2 an und ist auf dieser verschiebbar. Durch diese Verschiebbarkeit werden Verschiebungen, die zwischen den Bauteilen auftreten , berücksichtigt.

Das obere Gleitelement 4-1 (FIG.4A, FIG. 4B) weist einen geschlitzten Stiel mit zwei federnden Teilstücken T1 und T2 mit einem äußeren Randwulst W1 auf (der geschlitzte Stiel kann auch mehr als zwei federnde Teilstücke aufweisen).
Das untere Gleitelement 4-2 hat einen Hohl-Stiel mit einem inneren Wulst W2. Beim Einführen des geschlitzten Stiels des oberen Gleitelementes in den hohlen Stiel des unteren Gleitelementes werden die Teilstücke T1, T2 vorübergehend nach innen gedrückt. Sobald der Randwulst W1 hinter den Randwulst W2 gelangt, federn die Teilstücke wieder nach außen und die Schnappverbindung ist hergestellt.
Die Gleitelemente können auch auf andere Art miteinander verbunden werden.
Der obere und untere Rand des Schwingungsdämpferringes liegt eng an den Unterseiten der Köpfe der miteinander verbundenen Gleitelemente an.

FIG.1C zeigt
eine auszugsweise Schnittdarstellung der erfindungsgemäßen Verbindungsanordnung für einen Schwingungsdämpferring 3' gemäß FIG. 3C und für Gleitelemente gemäß FIG. 4A und 4B.

FIG. 2B zeigt
eine perspektivische Darstellung einer zweiten Ausführungsform des Haltearmes 1'. Hier ist das zungenartige Teil mit dem auf dessen Ober- und Unterseite angebrachten Gleitelemeneten randwärts (1R') mit dem Befestigungsflansch (1F') versteift. Der Rand an der Zungenspize dient gleichzeitig als Stoßschutz für den Schwingungsdämpferring beim Einführen des Haltearms in das Aufnehmerteil.

Die Erfindung ist nicht auf die wiedergegebenen Ausführungsbeispiele beschränkt.

Es ist auch möglich, die Schwingungsdämpferring-gepufferten Gleitelemente am Aufnehmerteil und nicht auf dem Haltearm anzuordnen.
Anstelle des Schwingungsdämpfferings können auch beliebige andere Schwingungsdämpferelemente verwendet werden, z.B. zylinderförmige, die durch Aufkleben o.a. auf dem Haltearm oder am Aufnehmerteil befestigt sein können.
Die Gleitelemente können sogar entfallen, wenn die Schwingungsdämpfereleemente selbst für das Gleiten geeignete Teilbereiche aufweisen, mit denen sie an der Innenwandung des Aufnehmerteils bzw. am Haltearm entlanggleiten.
Der Haltearm kann z.B. auch kolbenförmig und das Aufnehmerteil hohlzylinderförmig ausgeführt sein.
Desweiteren muß der Schwingungsdämpferring nicht beidseits mit einem Gleitelement versehen sein. Bei verschiedenen Anwendungen ist eine einseitige Anordnung ausreichend.
Außerdem kann der Schwingungsdämpffering auch nur einseitig auf dem Haltearm oder im Aufnehmerteil angeordnet sein, z.B. durch Verkleben o.a.

## Patentansprüche

1. Schwingungsdämpfende Verbindungsanordnung für zwei gegeneinander verschiebliche Bauteile (MP1, MP2);
**dadurch gekennzeichnet, daß**
ein mit dem ersten Bauteil (MP1) verbindbarer oder verbundener Haltearm (1)
vorgesehen ist und
ein mit dem zweiten Bauteil (MP2) verbindbares oder verbundenes Aufnehmerteil (2) für den Haltearm (1) vorgesehen ist,
daß der Haltearm (1) in das Aufnehmerteil (2) ragt und mindestens mit einem Schwingungsdämpferelement (3) elastischen Materials verbunden ist,
das auf der das Aufnehmerteil (2) berührenden Seite auf dieser entlanggleitbar ausgebildet ist.

2. Schwingungsdämpfende Verbindungsanordnung für zwei gegeneinander verschiebliche Bauteile (MP1, MP2);
**dadurch gekennzeichnet, daß**
ein mit dem ersten Bauteil (MP1) verbindbarer oder verbundener Haltearm (1)
vorgesehen ist und
ein mit dem zweiten Bauteil (MP2) verbindbares oder verbundenes Aufnehmerteil (2) für den Haltearm (1) vorgesehen ist,
daß der Haltearm (1) in das Aufnehmerteil (2) ragt und
daß das Aufnehmerteil (2) mindestens mit einem Schwingungsdämpferelement elastischen Materials verbunden ist,
das auf der den Haltearm berührenden Seite auf diesem entlanggleitbar ausgebildet ist.

3. Anordnung nach Anspruch 1 oder 2,
**dadurch gekennzeichnet, daß**
das Schwingungsdämpferelement mit einem Gleitkopf verbunden ist.

4. Anordnung nach Anspruch 3,
**dadurch gekennzeichnet, daß**
das Schwingungsdämpferelement zylinderförmig oder als Schwingungsdämpferring ausgebildet ist.

5. Anordnung nach Anspruch 4,
**dadurch gekennzeichnet, daß**
in der Öffnung des Schwingungsdämpferringes (3;3') mindestens ein am Aufnehmerteil (2) entlanggleitbares Gleitelement (4-1, 4-2) angeordnet ist, welches nicht direkt mit dem Haltearm (1) verbunden ist.

6. Anordnung nach Anspruch 1 und 4,
**dadurch gekennzeichnet, daß**
der Haltearm (1) eine zungenartige (1-2) Ausbildung und eine Bohrung (1-1) zur Aufnahme des Schwingungsdämpferringes (3) aufweist und
daß das Aufnehmerteil (2) hohlprofilartig ausgebildet ist.

7. Anordnung nach Anspruch 1 und 4,
**dadurch gekennzeichnet, daß**
der Haltearm eine kolbenartige Ausbildung und Bohrungen zur Aufnahme von Schwingungsdämpferringen aufweist und
daß das Aufnehmerteil hohlzylinderartig ausgebildet ist.

8. Anordnung nach Anspruch 1 und 4,
**dadurch gekennzeichnet, daß**
der Schwingungsdämpferring (3) eine konzentrische periphere Nut (N, N') aufweist,
in welcher der Rand einer im Haltearm (1) angeordneten Öffnung (Bohrung) (1-1) angeordnet ist.

9. Anordnung nach Anspruch 2 und 4,
**dadurch gekennzeichnet, daß**
der Schwingungsdämpferring eine konzentrische periphere Nut aufweist,
in welcher der Rand einer im Aufnehmerteil angeordneten Öffnung (Bohrung ) angeordnet ist.

10. Anordnung nach Anspruch 5,
**dadurch gekennzeichnet, daß**
das Gleitelement (4-1, 4-2) einen die Öffnung des Schwingungsdämpferringes (1) überragenden Kopf (4-1-K, 4-2-K) aufweist.

11. Anordnung nach Anspruch 10,
**dadurch gekennzeichnet,**
**daß** der Kopf des Gleitelementes konvex gewölbt ist.

12. Anordnung nach Anspruch 4,
**dadurch gekennzeichnet,**
**daß** auf beiden Seiten der Öffnung des Schwingungsdämpferringes (3;3') ein Gleitelement (4-1, 4-2) angeordnet ist.

13. Anordnung nach Anspruch 12,
**dadurch gekennzeichnet,**
**daß** beide Gleitelemente (4-1, 4-2) in der Öffnung des Schwingungsdämpferringes (3,3') miteinander verbindbar sind.

14. Anordnung nach Anspruch 13,
**dadurch gekennzeichnet, daß**
das eine Gleitelement (4-1) einen geschlitzten Hohl-Stiel mit federnden Teilstücken (T1, T2) mit einem äußeren Randwulst (W1) aufweist
und daß
das andere Gleitelement (4-2) einen Hohl-Stiel aufweist mit einem inneren Randwulst (W2) und
daß der innere Randwulst (W2) vom äußeren (W1) übergreifbar ist.

15. Anordnung nach einem der Ansprüche 1 bis 14,
**dadurch gekennzeichnet, daß**
der Schwingungsdämpferring aus Gummi oder Kunststoff, insbesondere Silikon besteht.

## Claims

1. Vibration-damping connection arrangement for two components (MP1, MP2) capable of being moved against one another,
**characterised in that**
a holding arm (1) connected or capable of being connected with the first component (MP1) is provided, and a receiving element (2) for the holding arm connected or capable of being connected with the second component (MP2) is provided, that the holding arm (1) projects into the receiving element (2), and is connected with at least one vibration-damping element (3) of elastic material which is located on the side touching the receiving element (2) and is capable of sliding along this.

2. Vibration-damping connection arrangement for two components (MP1, MP2) capable of being moved against one another,
**characterised in that**
a holding arm (1) connected or capable of being connected with the first component (MP1) is provided, and a receiving element (2) for the holding arm connected or capable of being connected with the second component (MP2) is provided,
that the holding arm (1) projects into the receiving element (2), and that the receiving element (2) is joined with at least one vibration-damping element of elastic material which is located on the side touching the holding arm and is capable of sliding along this.

3. Arrangement according to claim 1 or 2,
**characterised in that**
the vibration-damping element is connected with a sliding head.

4. Arrangement according to claim 3,
**characterised in that**
the vibration-damping element is cylindrical or in the form of a vibration-damping ring.

5. Arrangement according to claim 4,
**characterised in that**
at least one sliding element (4-1, 4-2) capable of sliding along the receiving element (2) but which is not directly connected with the holding arm (1) is located in the opening of the vibration-damping ring (3;3').

6. Arrangement according to claim 1 and 4,
**characterised in that**
the holding arm (1) has a tongue-like device (1-2) and a hole (1-1) for receiving the vibration-damping ring (3) and that the receiving element (2) is in the form of a hollow section.

7. Arrangement according to claim 1 and 4,
**characterised in that**
the holding arm has a piston-like device and holes for receiving vibration-damping rings and that the receiving element is in the form of a hollow cylinder.

8. Arrangement according to claim 1 and 4,
**characterised in that**
the vibration-damping ring (3) has a concentric peripheral groove (N, N') in which the edge of an opening (hole) (1-1) in the holding arm (1) is located.

9. Arrangement according to claim 2 and 4,
**characterised in that**
the vibration-damping ring has a concentric peripheral groove in which the edge of an opening (hole) in the receiving element is located.

10. Arrangement according to claim 5,
**characterised in that**
the sliding element (4-1, 4-2) has a head (4-1-K, 4-2-K) which rises above the opening of the vibration-damping ring (1).

11. Arrangement according to claim 10,
**characterised in that**
the head of the sliding element is convex in shape.

12. Arrangement according to claim 4,
**characterised in that**
a sliding element (4-1, 4-2) is located on both sides of the opening of the vibration-damping ring (3;3').

13. Arrangement according to claim 12,
**characterised in that**
both sliding elements (4-1, 4-2) can be connected with one another in the opening of the vibration-damping ring (3,3').

14. Arrangement according to claim 13,
**characterised in that**
one of the sliding elements (4-1) has a slotted hollow shaft with spring-mounted parts (T1, T2) with an outer edge bead (W1),
and that
the other sliding element (4-2) has a hollow shaft with an inner edge bead (W2) and that the outer edge bead (W1) can fit over the inner edge bead (W2).

15. Arrangement according to one of the claims 1 - 14,
**characterised in that**
the vibration-damping ring is of rubber or plastic, in particular of silicone.

## Revendications

1. Dispositif d'assemblage amortissant les vibrations pour deux éléments de construction (MP1, MP2) mobiles l'un par rapport à l'autre, **caractérisé en ce qu'**il est prévu un bras de fixation (1) pouvant être relié ou relié au premier élément de construction (MP1) et une partie réceptrice (2) destinée au bras de fixation et reliée ou pouvant être reliée au deuxième élément de construction (MP2),
**en ce que** le bras de fixation (1) pénètre dans la partie réceptrice (2) et est relié avec au moins un élément amortissant les vibrations (3) en matériau élastique,
et **en ce que** le côté en contact avec la partie réceptrice (2) est conçu de façon à pouvoir glisser le long de celle-ci.

2. Dispositif d'assemblage amortissant les vibrations pour deux éléments de construction (MP1, MP2) mobiles l'un par rapport à l'autre, **caractérisé en ce qu'**il est prévu un bras de fixation (1) pouvant être relié ou relié au premier élément de construction (MP1) et une partie réceptrice (2) destinée au bras de fixation et reliée ou pouvant être reliée au deuxième élément de construction (MP2),
**en ce que** le bras de fixation (1) pénètre dans la partie réceptrice (2)
et **en ce que** la partie réceptrice (2) est reliée avec au moins un élément amortissant les vibrations (3) en matériau élastique,
et **en ce que** le côté en contact avec le bras de fixation est conçu de façon à pouvoir glisser le long de celui-ci.

3. Dispositif selon la revendication 1 ou 2, **caractérisé en ce que** l'élément amortissant les vibrations est relié à une tête coulissante.

4. Dispositif selon la revendication 3, **caractérisé en ce que** l'élément amortissant les vibrations est cylindrique et conformé comme une bague amortissant les vibrations.

5. Dispositif selon la revendication 4, **caractérisé en ce qu'**il est prévu dans l'ouverture de la bague amortissant les vibrations (3 ; 3') au moins un élément coulissant (4-1, 4-2) pouvant coulisser sur la partie réceptrice (2), qui n'est pas directement relié au bras de fixation (1).

6. Dispositif selon les revendications 1 et 4, **caractérisé en ce que** le bras de fixation (1) présente une structure en languette (1-2) et un alésage (1-1) destiné à recevoir la bague amortissant les vibrations (3)
et **en ce que** la partie réceptrice (2) est conçue comme un profilé creux.

7. Dispositif selon les revendications 1 et 4, **caractérisé en ce que** le bras de fixation est en forme de piston et présente des alésages destinés à recevoir des bagues amortissant les fixations
et **en ce que** la partie réceptrice est en forme de cylindre creux.

8. Dispositif selon les revendications 1 et 4, **caractérisé en ce que** la bague amortissant les vibrations (3) présente une gorge périphérique concentrique (N, N') dans laquelle est disposé le bord d'une ouverture (alésage) (1-1) ménagée dans le bras de fixation (1).

9. Dispositif selon les revendications 2 et 4, **caractérisé en ce que** la bague amortissant les vibrations présente une gorge périphérique concentrique dans laquelle est disposé le bord d'une ouverture (alésage) ménagée dans la partie réceptrice.

10. Dispositif selon la revendication 5, **caractérisé en ce que** l'élément coulissant (4-1, 4-2) présente une tête (4-1-K, 4-2-K) qui dépasse de l'ouverture de la bague amortissant les vibrations (3).

11. Dispositif selon la revendication 10, **caractérisé en ce que** la tête de l'élément coulissant est convexe.

12. Dispositif selon la revendication 4, **caractérisé en ce qu'**il est prévu un élément coulissant (4-1, 4-2) de chaque côté de l'ouverture de la bague amortissant les vibrations (3 ; 3').

13. Dispositif selon la revendication 12, **caractérisé en ce que** les deux éléments coulissants (4-1, 4-2) peuvent être reliés l'un à l'autre dans l'ouverture de la bague amortissant les vibrations (3 ; 3').

14. Dispositif selon la revendication 13, **caractérisé en ce qu'**un élément coulissant (4-1) présente une tige creuse avec des parties élastiques (T1, T2) avec un bourrelet de bord extérieur (W1)
et **en ce que** l'autre élément coulissant (4-2) présente une tige creuse avec un bourrelet de bord intérieur (W2)
et **en ce que** le bourrelet de bord intérieur (W2) peut être saisi et entouré par le bourrelet de bord extérieur (W1).

15. Dispositif selon l'une quelconque des revendications 1 à 14, **caractérisé en ce que** la bague amortissant les vibrations se compose de caoutchouc ou de matière plastique, et en particulier de silicone.
